# EUROPEAN PATENT SPECIFICATION

(11) **EP 4 600 064 B1**
(45) Date of publication and mention of the grant of the patent: **09.09.2026**
(21) Application number: 23902032.4
(22) Date of filing: 02.06.2023
(51) Int. Cl.: B60K 11/02, F16H 57/04, H02K 9/19, H02K 9/26, H02K 7/10, B60R 17/02, B60K 1/00, B60K 17/04

(54) **COOLING AND LUBRICATING APPARATUS FOR ELECTRIC DRIVE ASSEMBLY, AND ELECTRIC DRIVE ASSEMBLY**
KÜHL- UND SCHMIERVORRICHTUNG FÜR ELEKTRISCHE ANTRIEBSANORDNUNG UND ELEKTRISCHE ANTRIEBSANORDNUNG
APPAREIL DE REFROIDISSEMENT ET DE LUBRIFICATION POUR ENSEMBLE D'ENTRAÎNEMENT ÉLECTRIQUE ET ENSEMBLE D'ENTRAÎNEMENT ÉLECTRIQUE

(30) Priority: 16.12.2022 CN 202211627694
(43) Date of publication of application: 13.08.2025
(73) Proprietor: Jing-Jin Electric Technologies Co., Ltd., Beijing 100015 (CN)
(72) Inventor: LI, Jianwen, Beijing 100015 (CN); DENG, Kaifei, Beijing 100015 (CN); DUAN, Chaoshuai, Beijing 100015 (CN); YU, Ping, Beijing 100015 (CN)
(74) Representative: Schwarz & Partner Patentanwälte GmbH
(86) International application number: PCT/CN2023/098067
(87) International publication number: WO 2024/124820

(56) References cited:
- CN-A- 1 249 558
- CN-A- 109 114 206
- CN-A- 112 421 889
- CN-A- 112 421 889
- CN-A- 112 701 856
- CN-A- 113 442 861
- CN-A- 113 905 917
- CN-U- 215 921 885
- CN-U- 218 966 667
- DE-A1- 102017 201 342
- DE-A1- 102017 201 342
- US-A- 4 644 815

## Description

### TECHNICAL FIELD

The present invention belongs to the technical field of cooling and lubrication of electric drive assemblies, and specifically relates to a cooling and lubricating device of an electric drive assembly and an electric drive assembly.

### BACKGROUND

With the continuous development of new energy vehicles, the requirements for the safety, power, energy consumption, noise and other related performances of the vehicle are increasingly higher. In order to enable the vehicle to adapt to various complex road conditions, the electric drive assembly of the vehicle needs to have technical characteristics such as high power, high torque, high speed, and high efficiency, and at the same time, higher requirements are put forward for the lubrication and cooling of the electric drive assembly.

Conventional gear oil thrower cannot meet the amount requirement of oil of various parts to be cooled and lubricated in the motor housing when the motor rotates at high speed. Thus, currently the method of providing a lubricating oil passage inside the motor shaft is mostly used for the cooling and lubrication of the motor. When the motor shaft rotates, the lubricating oil in the lubricating oil passage will be thrown to the parts that need cooling and lubrication due to the centrifugal force. However, when the motor speed is too high, the lubricating oil in the lubricating oil passage in the motor shaft will be thrown out with a higher speed, so that most lubricating oil will be thrown out when it flows to a front section of the lubricating oil passage, and a very small part of the lubricating oil can be left to the rear section of the lubricating oil passage, resulting in insufficient oil in the rear section of the lubricating oil passage. In this way, the parts to be cooled and lubricated at the rear section of the motor shaft cannot have sufficient lubricating liquid, resulting in poor cooling and lubrication effect of the electric drive assembly.

Document CN 113 905 917 A, according to its abstract, discloses a powertrain and an electric vehicle. The powertrain comprises a rotor core, a gear set, a rotating shaft, and an oil pumping system. The rotating shaft fixedly connects the rotor core and a drive gear in the gear set. A housing has an oil reservoir at the bottom and an oil collection tank at a higher position. A portion of the structure of a first gear in the gear set is located in the oil reservoir, and the first gear rotates such that cooling oil in the oil reservoir is lifted and collected by the oil collection tank. A cooling oil passage is provided inside the rotating shaft. Cooling oil in the oil collection tank flows to the cooling oil passage to dissipate heat from the rotor core. The oil pumping system comprises an oil pump used to pump cooling oil in the oil reservoir to the cooling oil passage. Two oil circuits are used to dissipate heat from the rotor core, so as to meet cooling requirements of the rotor core during both high-speed and low-speed operations of the powertrain, thereby improving the cooling performance of the rotor core of the powertrain.

### SUMMARY

In view of the above problems, the present invention proposes a cooling and lubricating device of an electric drive assembly and an electric drive assembly to overcome or at least partially solve the above problems.

In order to achieve the above object, the present invention adopts the following technical solutions.

An embodiment of the present invention provides a cooling and lubricating device of an electric drive assembly. The electric drive assembly comprises a motor and a reducer, the motor comprises a motor shaft and a motor housing, and the reducer comprises a reducer housing. The cooling and lubricating device comprises a pump oil assembly, an oil pump circuit and an oil return circuit;
the oil pump circuit comprises an oil inlet pipe, an shaft inner oil passage and a first oil outlet pore that are communicated in sequence, the shaft inner oil passage extends axially inside the motor shaft, the pump oil assembly pumps lubricating oil in the reducer housing into the shaft inner oil passage via the oil inlet pipe, the first oil outlet pore is provided on an outer circumference of the motor shaft and is used to sling the lubricating oil in the shaft inner oil passage to a part to be cooled and lubricated in the motor housing, an axial flow impeller is provided in the shaft inner oil passage and is used to pump the lubricating oil at an oil inlet end of the shaft inner oil passage towards an oil outlet end of the shaft inner oil passage;
the oil return circuit is provided at a bottom of the motor housing and used to return the lubricating oil in the motor housing into the reducer housing,
the oil inlet end of the oil inlet pipe is connected to the pump oil assembly, the oil outlet end of the oil inlet pipe extends into the shaft inner oil passage in the motor shaft, an oil retaining ring is provided between the oil inlet pipe and the shaft inner oil passage, an outer circumference of the oil retaining ring is fitted to an inner wall of the shaft inner oil passage with interference, and an inner circumference of the oil retaining ring is fitted to an outer circumference of the oil inlet pipe with clearance.

Further, the axial flow impeller is provided upstream of the first oil outlet pore.

Further, a shaft of the axial flow impeller is fixedly connected to the oil inlet end of the oil inlet pipe.

Further, an oil outlet opening is provided on the oil outlet end of the oil inlet pipe.

Further, the reducer also comprises a reducer input shaft, the motor shaft and the reducer input shaft are an integral shaft that is integrally formed, and the shaft inner oil passage axially penetrates the integral shaft.

Further, the reducer also comprises a reducer output shaft, the reducer output shaft and the integral shaft are arranged coaxially, a fixed bearing is provided between the reducer output shaft and the integral shaft, an inner ring of the fixed bearing is fixedly connected to the integral shaft, and an outer ring of the fixed bearing is fixedly connected to the reducer output shaft;
a second oil outlet pore communicated with the shaft inner oil passage is provided on an outer circumference of a power output end of the integral shaft, the second oil outlet pore is arranged obliquely or parallel to an axis of the integral shaft, and the second oil outlet pore is used to cool and lubricate the fixed bearing.

Further, the first oil outlet pore is arranged obliquely or perpendicular to the axis of the motor shaft, and is used to cool and lubricate any one or more of a motor bearing, a stator winding or a rotor.

Further, the pump oil assembly comprises an electronic oil pump and an oil filter unit;
the electronic oil pump is communicated with the bottom of the reducer housing via the oil filter unit and pumps lubricating oil in the reducer housing into the oil inlet pipe, and the oil filter unit is used to filter the lubricating oil.

Another embodiment of the present invention provides an electric drive assembly. The electric drive assembly comprises a motor and a reducer. The electric drive assembly uses the cooling and lubricating device as described above to cool and lubricate the motor.

The advantages and beneficial effects of the present invention are as follows. In the cooling and lubricating device of the electric drive assembly of the present invention, by providing the axial flow impeller in the shaft inner oil passage in the motor shaft, the lubricating oil at the oil inlet end of the shaft inner oil passage can be pumped towards the oil outlet end of the shaft inner oil passage, so that sufficient lubricating oil can flow to the oil outlet end of the shaft inner oil passage. When the motor rotates, it can be ensured that all the parts to be cooled and lubricated in the motor housing can have sufficient lubricating oil, so that the cooling and lubrication effect of the electric drive assembly is better, thereby extending the service life of the electric drive assembly; moreover, the cooling and lubricating device also has the advantages such as simple structure and low manufacturing cost.

### BRIEF DESCRIPTION OF DRAWINGS

By reading the detailed description of the preferred embodiments below, various other advantages and benefits will become clear to a person of ordinary skill in the art. The accompanying drawings are only used for the purpose of illustrating the preferred embodiments, and should not be considered as a limitation to the present invention. Moreover, throughout the drawings, the same reference numerals are used to denote the same components. In the drawings:
FIG. 1 is a schematic view of the structure of a cooling and lubricating device of an electric drive assembly in an embodiment of the present invention;
FIG. 2 is a schematic view of the connection relationship between an oil inlet pipe and an axial flow impeller in an embodiment of the present invention;
FIG. 3 is a perspective view of the structure of an open axial flow impeller;
FIG. 4 is a schematic view of the position relationship between a closed axial flow impeller and a motor shaft in another embodiment of the present invention;
FIG. 5 is a perspective view of the structure of a closed axial flow impeller;
FIG. 6 is an axial cross-sectional view of a reducer input shaft in an embodiment of the present invention; and
FIG. 7 is an axial cross-sectional view of a reducer input shaft in another embodiment of the present invention.

In the drawings: 1, motor; 2, reducer; 3, motor shaft; 4, motor housing; 5, reducer housing; 6, pump oil assembly; 7, oil inlet pipe; 8, shaft inner oil passage; 9, first oil outlet pore; 10, motor bearing; 11, rotor; 12, stator winding; 13, axial flow impeller; 14, oil retaining ring; 15, oil outlet opening; 16, reducer input shaft; 17, reducer output shaft; 18, fixed bearing; 19, second oil outlet pore.

### DETAILED DESCRIPTION

In order to make the object, technical solutions, and advantages of the present invention clearer, the present invention will be described clearly and completely in conjunction with the specific embodiments and corresponding drawings. Obviously, the embodiments described are only part of rather than all of the embodiments of the present disclosure. Based on the embodiments in the present invention, all other embodiments obtained by those of ordinary skill in the art without paying creative work shall fall within the protection scope of the present disclosure.

The technical solutions provided by embodiments of the present invention will be described in detail in conjunction with the accompanying drawings.

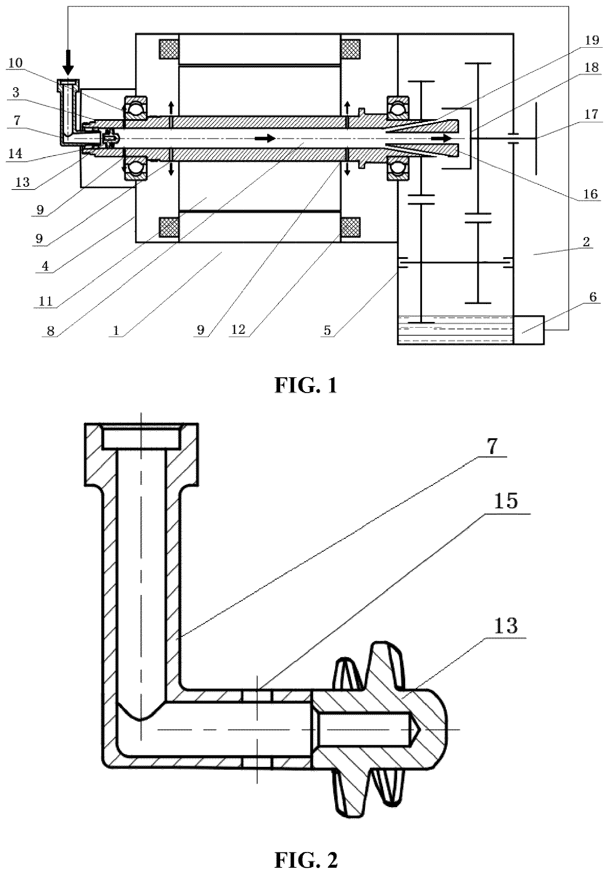

In an embodiment of the present invention, a cooling and lubricating device of an electric drive assembly is disclosed. As shown in FIG. 1, the electric drive assembly comprises a motor 1 and a reducer 2. The reducer 2 is arranged at a power output end of the motor 1. The motor 1 comprises a motor shaft 3 and a motor housing 4. The reducer 2 comprises a reducer housing 5. The cooling and lubricating device comprises a pump oil assembly 6, an oil pump circuit and an oil return circuit. The pump oil assembly 6 is used to pump the lubricating oil in the reducer housing 5 into the oil pump circuit.

Specifically, the pump oil circuit comprises an oil inlet pipe 7, a shaft inner oil passage 8 and a first oil outlet pore 9 that are communicated in sequence. The shaft inner oil passage 8 extends axially inside the motor shaft 3. The pump oil assembly 6 can pump the lubricating oil in the reducer housing 5 into the oil inlet pipe 7, and then the lubricating oil enters the shaft inner oil passage 8 via the oil inlet pipe 7. The first oil outlet pore 9 is arranged on the outer circumference of the motor shaft 3, and the orifice position of each first oil outlet pore 9 corresponds to a part to be cooled and lubricated in the motor housing 4. In this way, when the motor shaft 3 rotates, the first oil outlet pore 9 can sling the lubricating oil in the shaft inner oil passage 8 to the part to be cooled and lubricated in the motor housing 4, so as to realize the cooling and lubrication of this part. The number and position of the first oil outlet pore 9 can be adjusted according to actual needs, and the amount of lubricating oil reaching each part to be cooled and lubricated can be controlled by the size of the orifice of the first oil outlet pore 9.

Further, an axial flow impeller 13 is provided inside the shaft inner oil passage 8 in the motor shaft 3. When the motor shaft 3 rotates, the axial flow impeller 13 will generate axial pressure on the lubricating oil being in contact with the axial flow impeller 13, push the lubricating oil to flow forward, and thus pump the lubricating oil at the oil inlet end of the shaft inner oil passage 8 towards the oil outlet end of the shaft inner oil passage 8. In this way, it can be ensured that the amount of oil at the oil outlet end of the shaft inner oil passage 8 is sufficient, so that the amount of lubricating oil at each part of the shaft inner oil passage 8 is basically the same, and thus the parts to be cooled and lubricated at the rear section of the motor shaft 3 can have sufficient lubricating liquid. The parts to be cooled and lubricated may be a motor bearing 10, a rotor 11 and a stator winding 12. In addition, the oil inlet end of the shaft inner oil passage 8 is the end that is away from the reducer 2, and the oil outlet end of the shaft inner oil passage 8 is the end that is close to the reducer 2.

Further, the oil return circuit is arranged at the bottom of the motor housing 4, and is used to return the lubricating oil in the motor housing 4 to the reducer housing 5.

The flow path of the lubricating oil in the electric drive assembly is as follows. The lubricating oil at the bottom of the reducer housing 5 is pumped into the oil inlet pipe 7 by the pump oil assembly 6, and then the lubricating oil flows from the oil inlet pipe 7 into the shaft inner oil passage 8. The lubricating oil in the shaft inner oil passage 8 is conveyed to the parts to be cooled and lubricated in the motor housing 4 via the first oil outlet pore 9. After the cooling and lubricating process is completed, the lubricating oil returns to the bottom of the motor housing 4 due to gravity, and finally returns to the reducer housing 5 via the oil return circuit.

In sum, in the cooling and lubricating device of the electric drive assembly according to this embodiment, by providing an axial flow impeller inside the shaft inner oil passage in the motor shaft, the lubricating oil at the oil inlet end of the shaft inner oil passage can be pumped towards the oil outlet end of the shaft inner oil passage, so that sufficient lubricating oil can flow to the oil outlet end of the shaft inner oil passage. When the motor rotates, it can be ensured that all the parts to be cooled and lubricated in the motor housing can have sufficient lubricating oil, so that the cooling and lubrication effect of the electric drive assembly is better, thereby extending the service life of the electric drive assembly; moreover, the cooling and lubricating device also has the advantages such as simple structure and low manufacturing cost.

In this embodiment, as shown in FIG. 1, the oil inlet pipe 7 is fixedly connected to the motor housing 4, an oil inlet end of the oil inlet pipe 7 is connected to the pump oil assembly 6, and an oil outlet end of the oil inlet pipe 7 extends into the shaft inner oil passage 8 in the motor shaft 3. A clearance is provided between the oil inlet pipe 7 and the inner wall of the shaft inner oil passage 8 so that the oil inlet pipe 7 does not rotate with the motor shaft 3. An oil retaining ring 14 is provided between the oil inlet pipe 7 and the shaft inner oil passage 8. The outer circumference of the oil retaining ring 14 is fitted to the inner wall of the shaft inner oil passage 8 with interference, and the inner circumference of the oil retaining ring 14 is fitted to the outer circumference of the oil inlet pipe 7 with clearance, so that the lubricating oil can be prevented from flowing out from the gap between the oil inlet end of the shaft inner oil passage 8 and the oil outlet end of the oil inlet pipe 7, thereby ensuring that the lubricating oil can enter the shaft inner oil passage 8.

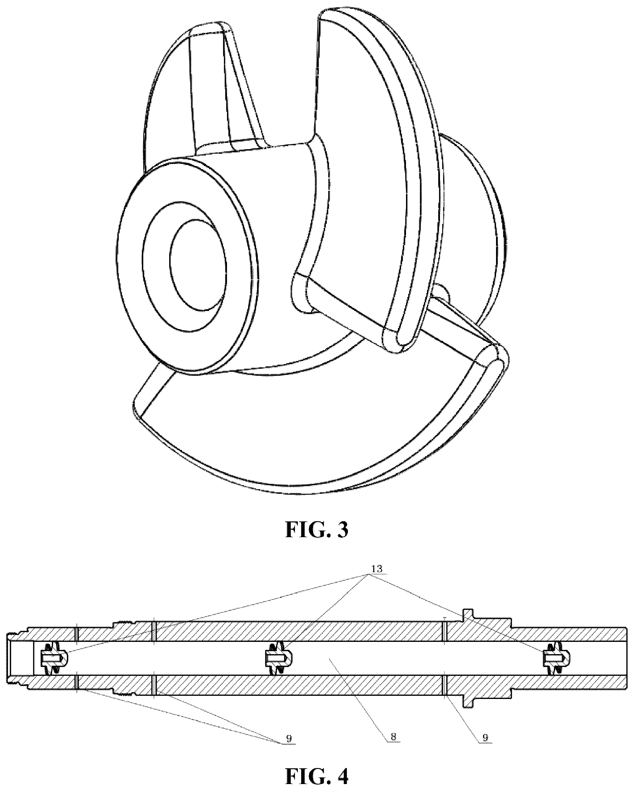

In addition, the axial flow impeller 13 is arranged upstream of the first oil outlet pore 9. The upstream refers to the side close to the oil inlet pipe 7. In this embodiment, as shown in FIG. 1, there may be one axial flow impeller 13, and the axial flow impeller 13 is arranged between the oil outlet end of the oil inlet pipe 7 and the first oil outlet pore 9. In other embodiments, as shown in FIG. 4, there may be multiple axial flow impellers 13, and the multiple axial flow impellers 13 are respectively arranged between the oil outlet end of the oil inlet pipe 7 and the first oil outlet pore 9, or between the first oil outlet pores 9. When the motor shaft 3 rotates at high speed, the lubricating oil in the shaft inner oil passage 8 will move circumferentially along with the motor shaft 3, so that the lubricating oil adheres to the inner wall of the shaft inner oil passage 8 and does not flow towards the first oil outlet pore 9. By arranging the axial flow impeller 13 upstream of the first oil outlet pore 9, the axial flow impeller 13 can give the lubricating oil an axial thrust, so that the adhesion of the lubricating oil to the inner wall of the shaft inner oil passage 8 is weakened, and thus the lubricating oil can flow to the first oil outlet pore 9.

In addition, as shown in FIGS. 1 and 2, the shaft of the axial flow impeller 13 is fixedly connected to the oil inlet end of the oil inlet pipe 7. Specifically, the axial flow impeller 13 is fixedly connected to the oil inlet pipe 7 by a welding, riveting or threading structure. Of course, the axial flow impeller 13 can also form an integral structure with the oil inlet pipe 7. As shown in FIG. 3, the axial flow impeller 13 can be an open axial flow impeller. The open axial flow impeller is similar to the structure of a water pump impeller. When the motor shaft 3 rotates, the motor shaft 3 drives the lubricating oil in the shaft inner oil passage 8 to move circumferentially. The lubricating oil will rotate relative to the open axial flow impeller. In this way, the open axial flow impeller will generate axial pressure on the lubricating oil and push the lubricating oil to move axially.

Further, an oil outlet opening 15 is provided on the oil outlet end of the oil inlet pipe 7. The oil outlet opening 15 is specifically provided on the outer circumference of the oil inlet pipe 7 between the axial flow impeller 13 and the oil retaining ring 14. The lubricating oil in the oil inlet pipe 7 enters the shaft inner oil passage 8 via the oil outlet opening 15, and then contacts the axial flow impeller 13.

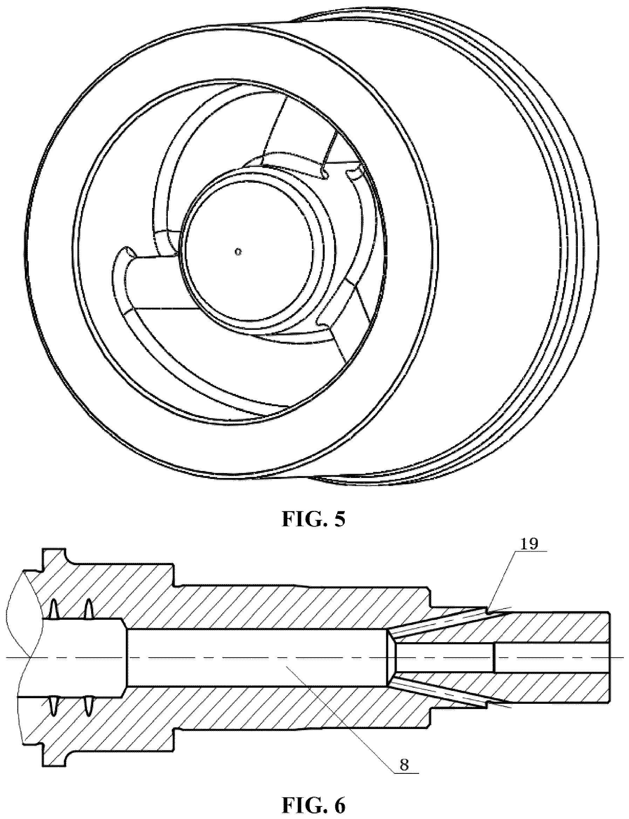

In other embodiments, as shown in FIG. 5, the axial flow impeller 13 may also be a closed axial flow impeller. The closed axial flow impeller is similar to adding an outer ring to the outer circumference of the open axial flow impeller. The outer ring of the closed axial flow impeller is fixedly connected to the inner wall of the shaft inner oil passage 8, so that it can rotate with the motor shaft 3. The outer ring of the closed axial flow impeller can be fixedly connected to the inner wall of the shaft inner oil passage 8 by spline or interference fit. Moreover, the closed axial flow impeller is specifically arranged in the shaft inner oil passage 8 between the oil outlet end of the oil inlet pipe 7 and the first oil outlet pore 9, and in the shaft inner oil passage 8 between first oil outlet pores 9. Alternatively, a closed axial flow impeller is provided only in the shaft inner oil passage 8 between the oil outlet end of the oil inlet pipe 7 and the first oil outlet pore 9. When the motor shaft 3 rotates, the motor shaft 3 will drive the lubricating oil in the shaft inner oil passage 8 to move circumferentially, but the rotation speed of the motor shaft 3 will be greater than the rotation speed of the lubricating oil, thereby causing the lubricating oil and the closed axial flow impeller to rotate relative to each other, so that the closed axial flow impeller will generate axial pressure on the lubricating oil and push the lubricating oil to move axially. Of course, both an open axial flow impeller and a closed axial flow impeller can be provided in the shaft inner oil passage.

In this embodiment, as shown in FIG. 1, the reducer 2 also comprises a reducer input shaft 16, the motor shaft 3 and the reducer input shaft 16 are an integral shaft that is integrally formed, and the shaft inner oil passage 8 axially penetrates the integral shaft, so that the lubricating oil can be delivered to the reducer housing 5 via the shaft inner oil passage 8 to achieve cooling and lubrication of the parts inside the reducer housing 5. In other embodiments, an axial flow impeller 13 can also be provided in the reducer input shaft 16, so that more lubricating oil can be delivered into the reducer housing 5.

Further, the reducer 2 also comprises a reducer output shaft 17. The reducer 2 outputs power via the reducer output shaft 17. The reducer output shaft 17 is arranged coaxially with the integral shaft. Moreover, a fixed bearing 18 is provided between the reducer output shaft 17 and the integral shaft, and is used to support and fix the reducer output shaft 17. Specifically, the inner ring of the fixed bearing 18 is fixedly connected to the integral shaft, and the outer ring of the fixed bearing 18 is fixedly connected to the reducer output shaft 17. Since the shaft inner oil passage 8 axially penetrates the integral shaft, the lubricating oil in the shaft inner oil passage 8 can flow out from the power output end of the integral shaft, thereby cooling the inner ring of the fixed bearing 18.

In addition, as shown in FIGS. 1 and 6, a second oil outlet pore 19 communicated with the shaft inner oil passage 8 is provided on the outer circumference of the power output end of the integral shaft. The second oil outlet pore 19 is arranged obliquely to the axis of the integral shaft, and the orifice of the second oil outlet pore 19 corresponds to the fixed bearing 18 and is used to cool and lubricate the outer ring and balls of the fixed bearing 18. Since the reducer input shaft 16 is a stepped shaft, in order to ensure the structural strength of the reducer input shaft 16, the shaft inner oil passage 8 in the reducer input shaft 16 is also a stepped structure. Since the shaft inner oil passage 8 in the reducer input shaft 16 is also a stepped structure, when the reducer input shaft 16 rotates at high speed, it is difficult for the lubricating oil to flow across the stepped structure, and it is impossible to cool and lubricate the fixed bearing 18. The second oil outlet pore 19 is provided to ensure that the lubricating oil can be delivered to the fixed bearing 18.

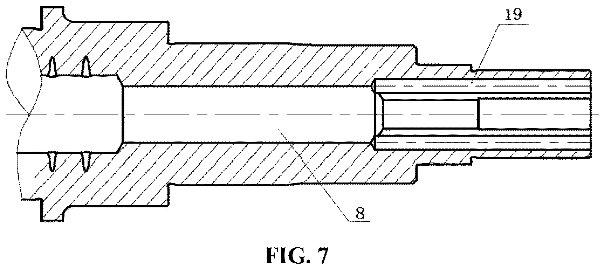

In other embodiments, as shown in FIG. 7, the second oil outlet pore 19 may also be arranged parallel to the axis of the integral shaft.

In this embodiment, as shown in FIG. 1 and FIG. 4, the first oil outlet pores 9 are arranged perpendicular to the axis of the motor shaft 3, and the orifices of the first oil outlet pores 9 correspond to the motor bearing 10 and the stator winding 12 and are used to cool and lubricate the motor bearing 10 and the stator winding 12. Of course, the first oil outlet pores 9 can also be used to cool and lubricate any one or more of the motor bearing 10, the rotor 11 or the stator winding 12. Moreover, the first oil outlet pores can also be arranged obliquely to the axis of the motor shaft 3.

Further, the pump oil assembly comprises an electronic oil pump and an oil filter unit.

The electronic oil pump is communicated with the bottom of the reducer housing via the oil filter unit, and pumps the lubricating oil in the reducer housing into the oil inlet pipe. The oil filter unit is used to filter the lubricating oil. Before the lubricating oil in the reducer housing enters the electronic oil pump, it is first filtered by the oil filter unit to filter out particles in the lubricating oil to prevent the particles from clogging the pump oil passage and affecting the normal operation of the electric drive assembly. Moreover, the oil filter unit is arranged at the bottom of the reducer housing, so that the bottom space of the reducer housing is fully utilized, and also the lubricating oil in the reducer housing can enter the oil filter unit for filtration under the action of gravity. In addition, the amount of oil an electronic oil pump pumps can be adjusted according to the rotation speed of the motor shaft. When the motor rotates at a low speed, the motor generates less heat, and the amount of oil an electronic oil pump pumps is small; when the motor rotates at a high speed, the motor generates more heat, and the amount of oil an electronic oil pump pumps is large. In this embodiment, by using an electronic oil pump to pump oil, the oil level in the reducer housing can be lowered, the oil stirring loss can be reduced, and thus the efficiency of the electric drive assembly is improved.

Further, in order to prevent the deterioration of the oil filter unit due to long-term use, the oil filter unit can be a detachable oil filter, and the filtering effect of the oil filter unit can be ensured by replacing the filter core.

In another embodiment of the present invention, an electric drive assembly is disclosed. The electric drive assembly comprises a motor and a reducer. The electric drive assembly uses the cooling and lubricating device as described in above embodiments to cool and lubricate the motor. The electric drive assembly has the advantages of good cooling and lubrication effect and long service life.

The above merely describes particular embodiments of the present invention. By the teaching of the present invention, a person skilled in the art can make other modifications or variations based on the above embodiments. A person skilled in the art should appreciate that, the detailed description above is only for the purpose of explaining the present invention, and the protection scope of the present invention should be subject to the protection scope of the claims.

## Claims

1. A cooling and lubricating device of an electric drive assembly, the electric drive assembly comprising a motor (1) and a reducer (2), the motor (1) comprising a motor shaft (3) and a motor housing (4), and the reducer (2) comprising a reducer housing (5),
the cooling and lubricating device comprises a pump oil assembly (6), an oil pump circuit and an oil return circuit;
the oil pump circuit comprises an oil inlet pipe (7), an shaft inner oil passage (8) and a first oil outlet pore (9) that are communicated in sequence, the shaft inner oil passage (8) extends axially in the motor shaft (3), the pump oil assembly (6) pumps lubricating oil in the reducer housing (5) into the shaft inner oil passage (8) via the oil inlet pipe (7), the first oil outlet pore (9) is provided on an outer circumference of the motor shaft (3) and is used to sling the lubricating oil in the shaft inner oil passage (8) to a part to be cooled and lubricated in the motor housing (4), an axial flow impeller (13) is provided in the shaft inner oil passage (8) and is used to pump the lubricating oil at an oil inlet end of the shaft inner oil passage (8) towards an oil outlet end of the shaft inner oil passage (8);
the oil return circuit is provided at a bottom of the motor housing (4) and used to return the lubricating oil in the motor housing (4) into the reducer housing (5),
**characterized in that**: an oil inlet end of the oil inlet pipe (7) is connected to the pump oil assembly (6), an oil outlet end of the oil inlet pipe (7) extends into the shaft inner oil passage (8) in the motor shaft (3), an oil retaining ring (14) is provided between the oil inlet pipe (7) and the shaft inner oil passage (8), an outer circumference of the oil retaining ring (14) is fitted to an inner wall of the shaft inner oil passage (8) with interference, and an inner circumference of the oil retaining ring (14) is fitted to an outer circumference of the oil inlet pipe (7) with clearance.

2. The cooling and lubricating device of an electric drive assembly according to claim 1, **characterized in that**: the axial flow impeller (13) is provided upstream of the first oil outlet pore (9).

3. The cooling and lubricating device of an electric drive assembly according to claim 2, **characterized in that**: a shaft of the axial flow impeller (13) is fixedly connected to the oil inlet end of the oil inlet pipe (7).

4. The cooling and lubricating device of an electric drive assembly according to claim 3, **characterized in that**: an oil outlet opening (15) is provided on the oil outlet end of the oil inlet pipe (7).

5. The cooling and lubricating device of an electric drive assembly according to claim 1, **characterized in that**: the reducer (2) also comprises a reducer input shaft (16), the motor shaft (3) and the reducer input shaft (16) are an integral shaft that is integrally formed, and the shaft inner oil passage (8) axially penetrates the integral shaft.

6. The cooling and lubricating device of an electric drive assembly according to claim 5, **characterized in that**: the reducer (2) also comprises a reducer output shaft (17), the reducer output shaft (17) and the integral shaft are arranged coaxially, a fixed bearing (18) is provided between the reducer output shaft (17) and the integral shaft, an inner ring of the fixed bearing (18) is fixedly connected to the integral shaft, and an outer ring of the fixed bearing (18) is fixedly connected to the reducer output shaft (17);
a second oil outlet pore communicated with the shaft inner oil passage (8) is provided on an outer circumference of a power output end of the integral shaft, the second oil outlet pore is arranged obliquely or parallel to an axis of the integral shaft, and the second oil outlet pore is used to cool and lubricate the fixed bearing (18).

7. A cooling and lubricating device of an electric drive assembly according to any one of claims 1 to 6, **characterized in that**: the first oil outlet pore (9) is arranged obliquely or perpendicular to the axis of the motor shaft (3), and is used to cool and lubricate any one or more of a motor bearing (10), a stator winding (12) or a rotor (11).

8. A cooling and lubricating device of an electric drive assembly according to any one of claims 1 to 6, **characterized in that**: the pump oil assembly (6) comprises an electronic oil pump and an oil filter unit;
the electronic oil pump is communicated with the bottom of the reducer housing (5) via the oil filter unit and pumps lubricating oil in the reducer housing (5) into the oil inlet pipe (7), and the oil filter unit is used to filter the lubricating oil.

9. An electric drive assembly comprising a motor (1) and a reducer (2), **characterized in that**: the electric drive assembly uses the cooling and lubricating device according to any one of claims 1 to 8 to cool and lubricate the motor (1).

## Patentansprüche

1. Eine Kühl- und Schmiervorrichtung für eine elektrische Antriebsbaugruppe, wobei die elektrische Antriebsbaugruppe einen Motor (1) und ein Untersetzungsgetriebe (2) umfasst, wobei der Motor (1) eine Motorwelle (3) und ein Motorgehäuse (4) umfasst und das Untersetzungsgetriebe (2) ein Getriebegehäuse (5) umfasst,
die Kühl- und Schmiervorrichtung eine Ölpumpeneinheit (6), einen Ölpumpenkreis und einen Ölrücklaufkreis umfasst;
der Ölpumpenkreis umfasst eine Öleinlassleitung (7), einen inneren Ölkanal (8) in der Welle und eine erste Ölauslassöffnung (9), die nacheinander miteinander verbunden sind, wobei sich der innere Ölkanal (8) in der Motorwelle (3) axial erstreckt, die Ölpumpeneinheit (6) pumpt Schmieröl aus dem Getriebegehäuse (5) über die Öleinlassleitung (7) in den inneren Ölkanal (8) der Welle, die erste Ölauslassöffnung (9) ist an einem Außenumfang der Motorwelle (3) vorgesehen und dient dazu, das Schmieröl im inneren Ölkanal (8) der Welle zu einem zu kühlenden und zu schmierenden Teil im Motorgehäuse (4) zu schleudern, ein Axiallaufrad (13) ist im inneren Ölkanal (8) der Welle vorgesehen und dient dazu, das Schmieröl an einem Öleinlassende des inneren Ölkanals (8) der Welle in Richtung eines Ölauslassendes des inneren Ölkanals (8) der Welle zu pumpen;
der Ölrücklaufkreis ist an einem Boden des Motorgehäuses (4) vorgesehen und dient dazu, das Schmieröl im Motorgehäuse (4) in das Getriebegehäuse (5) zurückzuführen,
**dadurch gekennzeichnet, dass**: ein Öleinlassende der Öleinlassleitung (7) mit der Ölpumpeneinheit (6) verbunden ist, ein Ölauslassende der Öleinlassleitung (7) in den inneren Ölkanal (8) der Motorwelle (3) hineinragt, ein Ölrückhalte-Ring (14) zwischen der Öleinlassleitung (7) und dem inneren Ölkanal (8) der Welle vorgesehen ist, ein Außenumfang des Ölrückhalte-Rings (14) mit Presssitz an einer Innenwand des inneren Ölkanals (8) der Welle sitzt und ein Innenumfang des Ölrückhalte-Rings (14) mit Spiel an einem Außenumfang der Öleinlassleitung (7) sitzt.

2. Kühl- und Schmiervorrichtung einer elektrischen Antriebsbaugruppe nach Anspruch 1, **dadurch gekennzeichnet, dass**: das Axiallaufrad (13) stromaufwärts der ersten Ölauslassöffnung (9) vorgesehen ist.

3. Kühl- und Schmiervorrichtung einer elektrischen Antriebsbaugruppe nach Anspruch 2, **dadurch gekennzeichnet, dass**: eine Welle des Axiallaufrads (13) fest mit dem Öleinlassende der Öleinlassleitung (7) verbunden ist.

4. Kühl- und Schmiervorrichtung einer elektrischen Antriebsbaugruppe nach Anspruch 3, **dadurch gekennzeichnet, dass** am Ölauslassende der Öleinlassleitung (7) eine Ölauslassöffnung (15) vorgesehen ist.

5. Kühl- und Schmiervorrichtung einer elektrischen Antriebsbaugruppe nach Anspruch 1, **dadurch gekennzeichnet, dass**: das Untersetzungsgetriebe (2) zudem eine Untersetzungsgetriebe-Eingangswelle (16) umfasst, die Motorwelle (3) und die Untersetzungsgetriebe-Eingangswelle (16) eine einstückig geformte Welle bilden und der innere Ölkanal (8) der Welle die einstückige Welle axial durchdringt.

6. Kühl- und Schmiervorrichtung einer elektrischen Antriebsbaugruppe nach Anspruch 5, **dadurch gekennzeichnet, dass**: das Untersetzungsgetriebe (2) zudem eine Getriebeausgangswelle (17) umfasst, die Getriebeausgangswelle (17) und die einstückige Welle koaxial angeordnet sind, ein Festlager (18) zwischen der Getriebeausgangswelle (17) und der einstückigen Welle vorgesehen ist, ein Innenring des Festlagers (18) fest mit der einstückigen Welle verbunden ist und ein Außenring des Festlagers (18) fest mit der Getriebeausgangswelle (17) verbunden ist;
eine zweite Ölauslassöffnung, die mit dem inneren Ölkanal (8) der Welle in Verbindung steht, ist an einem Außenumfang eines Leistungsabgangsendes der integrierten Welle vorgesehen, die zweite Ölauslassöffnung ist schräg oder parallel zu einer Achse der integrierten Welle angeordnet, und die zweite Ölauslassöffnung dient zur Kühlung und Schmierung des Festlagers (18).

7. Kühl- und Schmiervorrichtung einer elektrischen Antriebsbaugruppe nach einem der Ansprüche 1 bis 6, **dadurch gekennzeichnet, dass**: die erste Ölauslassöffnung (9), schräg oder senkrecht zur Achse der Motorwelle (3) angeordnet ist und zum Kühlen und Schmieren eines oder mehrerer Elemente aus der Gruppe bestehend aus einem Motorlager (10), einer Statorwicklung (12) oder einem Rotor (11) dient.

8. Kühl- und Schmiervorrichtung einer elektrischen Antriebsbaugruppe nach einem der Ansprüche 1 bis 6, **dadurch gekennzeichnet, dass**: die Ölpumpeneinheit (6) eine elektronische Ölpumpe und eine Ölfiltereinheit umfasst;
die elektronische Ölpumpe über die Ölfiltereinheit mit dem Boden des Getriebegehäuses (5) verbunden ist und Schmieröl aus dem Getriebegehäuse (5) in die Öleinlassleitung (7) pumpt, und die Ölfiltereinheit zum Filtern des Schmieröls dient.

9. Elektrische Antriebsbaugruppe, umfassend einen Motor (1) und ein Untersetzungsgetriebe (2), **dadurch gekennzeichnet, dass**: die elektrische Antriebsbaugruppe die Kühl- und Schmiervorrichtung gemäß einem der Ansprüche 1 bis 8 verwendet, um den Motor (1) zu kühlen und zu schmieren.

## Revendications

1. Dispositif de refroidissement et de lubrification d'un ensemble d'entraînement électrique, l'ensemble d'entraînement électrique comprenant un moteur (1) et un réducteur (2), le moteur (1) comprenant un arbre moteur (3) et un carter de moteur (4), et le réducteur (2) comprenant un carter de réducteur (5);
le dispositif de refroidissement et de lubrification comprenant un ensemble de pompe à huile (6), un circuit de pompe à huile et un circuit de retour d'huile;
le circuit de pompe à huile comprenant un tuyau d'entrée d'huile (7), un passage d'huile interne à l'arbre (8) et un premier orifice de sortie d'huile (9) qui communiquent en série, le passage d'huile interne à l'arbre (8) s'étendant axialement dans l'arbre moteur (3), l'ensemble de pompe à huile (6) pompant l'huile de lubrification dans le carter de réducteur (5) vers le passage d'huile interne à l'arbre (8) via le tuyau d'entrée d'huile (7), le premier orifice de sortie d'huile (9) étant prévu sur une circonférence extérieure de l'arbre moteur (3) et étant utilisé pour projeter l'huile de lubrification dans le passage d'huile interne à l'arbre (8) vers une pièce à refroidir et à lubrifier dans le carter de moteur (4), une turbine à flux axial (13) étant prévue dans le passage d'huile interne à l'arbre (8) et étant utilisée pour pomper l'huile de lubrification à une extrémité d'entrée d'huile du passage d'huile interne à l'arbre (8) vers une extrémité de sortie d'huile du passage d'huile interne à l'arbre (8),
le circuit de retour d'huile étant prévu au fond du carter de moteur (4) et étant utilisé pour renvoyer l'huile de lubrification dans le carter de moteur (4) vers le carter de réducteur (5),
**caractérisé en ce que**: une extrémité d'entrée d'huile du tuyau d'entrée d'huile (7) est raccordée à l'ensemble de pompe à huile (6), une extrémité de sortie d'huile du tuyau d'entrée d'huile (7) s'étend dans le passage d'huile interne à l'arbre (8) dans l'arbre moteur (3), une bague de retenue d'huile (14) est prévue entre le tuyau d'entrée d'huile (7) et le passage d'huile interne à l'arbre (8), une circonférence extérieure de la bague de retenue d'huile (14) est adaptée à une paroi interne du passage d'huile interne à l'arbre (8) avec une interference, et une circonférence intérieure de la bague de retenue d'huile (14) est adaptée à une circonférence extérieure du tuyau d'entrée d'huile (7) avec un certain jeu.

2. Dispositif de refroidissement et de lubrification d'un ensemble d'entraînement électrique selon la revendication 1, **caractérisé en ce que**: la turbine à flux axial (13) est prévue en amont du premier orifice de sortie d'huile (9).

3. Dispositif de refroidissement et de lubrification d'un ensemble d'entraînement électrique selon la revendication 2, **caractérisé en ce que**: un arbre de la turbine à flux axial (13) est relié de manière fixe à l'extrémité d'entrée d'huile du tuyau d'entrée d'huile (7).

4. Dispositif de refroidissement et de lubrification d'un ensemble d'entraînement électrique selon la revendication 3, **caractérisé en ce que**: une ouverture de sortie d'huile (15) est prévue à l'extrémité de sortie d'huile du tuyau d'entrée d'huile (7).

5. Dispositif de refroidissement et de lubrification d'un ensemble d'entraînement électrique selon la revendication 1, **caractérisé en ce que**: le réducteur (2) comprend également un arbre d'entrée de réducteur (16), l'arbre moteur (3) et l'arbre d'entrée de réducteur (16) constituent un arbre intégré qui est formé intégralement, et le passage d'huile interne à l'arbre (8) traverse axialement l'arbre intégré.

6. Dispositif de refroidissement et de lubrification d'un ensemble d'entraînement électrique selon la revendication 5, **caractérisé en ce que**: le réducteur (2) comprend également un arbre de sortie de réducteur (17), l'arbre de sortie de réducteur (17) et l'arbre intégré sont disposés coaxialement, un palier fixe (18) est prévu entre l'arbre de sortie de réducteur (17) et l'arbre intégré, une bague intérieure du palier fixe (18) est reliée de manière fixe à l'arbre intégré, et une bague extérieure du palier fixe (18) est reliée de manière fixe à l'arbre de sortie de réducteur (17);
un second orifice de sortie d'huile, communiquant avec le passage d'huile interne à l'arbre (8), est prévu sur une circonférence extérieure d'une extrémité de sortie de puissance de l'arbre intégré, le second orifice de sortie d'huile est disposé obliquement ou parallèlement à un axe de l'arbre intégré, et le second orifice de sortie d'huile est utilisé pour refroidir et lubrifier le palier fixe (18).

7. Dispositif de refroidissement et de lubrification d'un ensemble d'entraînement électrique selon l'une quelconque des revendications 1 à 6, **caractérisé en ce que**: le premier orifice de sortie d'huile (9) est disposé obliquement ou perpendiculairement à l'axe de l'arbre moteur (3) et est utilisé pour refroidir et lubrifier un ou plusieurs des éléments suivants: un palier de moteur (10), un enroulement statorique (12) ou un rotor (11).

8. Dispositif de refroidissement et de lubrification d'un ensemble d'entraînement électrique selon l'une quelconque des revendications 1 à 6, **caractérisé en ce que**: l'ensemble de pompe à huile (6) comprend une pompe à huile électronique et une unité de filtre d'huile;
la pompe à huile électronique communique avec le fond du carter de réducteur (5) via l'unité de filtre d'huile et pompe l'huile de lubrification dans le carter de réducteur (5) vers le tuyau d'entrée d'huile (7), et l'unité de filtre d'huile est utilisée pour filtrer l'huile de lubrification.

9. Ensemble d'entraînement électrique comprenant un moteur (1) et un réducteur (2), **caractérisé en ce que**: l'ensemble d'entraînement électrique utilise le dispositif de refroidissement et de lubrification selon l'une quelconque des revendications 1 à 8 pour refroidir et lubrifier le moteur (1).
